# EUROPEAN PATENT SPECIFICATION

(11) **EP 1 547 457 B1**
(45) Date of publication and mention of the grant of the patent: **02.05.2007**
(21) Application number: 05075706.1
(22) Date of filing: 21.05.2003
(51) Int. Cl.: A01C 21/00, A01C 3/06, A01D 34/00

(54) **An assembly and a manure application machine for performing a manure application**
Zusammensetzung und Düngerstreumaschine zum Durchführen einer Verteilung von Dünger
Ensemble et machine distributeur de fumier pour effectuer une application de fumier

(30) Priority: 06.06.2002 NL 1020803
(43) Date of publication of application: 29.06.2005
(62) Divisional of application: 03076535.8
(73) Proprietor: Lely Enterprises AG, 6300 ZUG (CH)
(72) Inventor: Van der Berg, Karel, 2971 BR Bleskensgraaf (NL); Voogd, Lucien Eliza Niels, 4143 HG Leerdam (NL)
(74) Representative: Corten, Maurice Jean F.M.

(56) References cited:
- US-A- 5 528 888
- US-A- 5 974 348
- US-A1- 2002 049 522

## Description

The invention relates to an assembly for performing a manure application according to the preamble of claim 1.

Such an assembly is known from US-A1-2002/0049522. A drawback of the known assembly is that the manure application machine has frequently to be moved to the storage containers, which makes working with the known assembly time-consuming.

The invention aims at providing an alternative assembly for performing a manure application.

For this purpose, an assembly for performing a manure application of the above-described type comprises the features of the characterizing part of claim 1.

For the purpose of moving the autonomous manure application machine in a simple manner the manure application machine is in particular provided with a position-determining system for determining the momentary position of the manure application machine.

If the assembly is provided with a measuring device for measuring the amount of product in the storage container or the machine container, it is possible for example to move the autonomous manure application machine to a storage container depending on the measured amount.

The machine container is preferably capable of being disposed on the manure application machine. Alternatively the machine container comprises a dragging hose that can detachably be coupled to the manure application machine.

The invention will be explained hereinafter in further detail with reference to embodiments shown in the drawing, in which:
Figure 1 shows schematically in plan view an autonomous manure application machine in an agricultural parcel in an embodiment of an assembly according to the invention;
Figure 2 shows schematically a perspective view of an autonomous manure application machine for performing a manure application according to the invention;
Figure 3 shows schematically in plan view the crop-processing parts of an embodiment of a manure application machine according to the invention, and

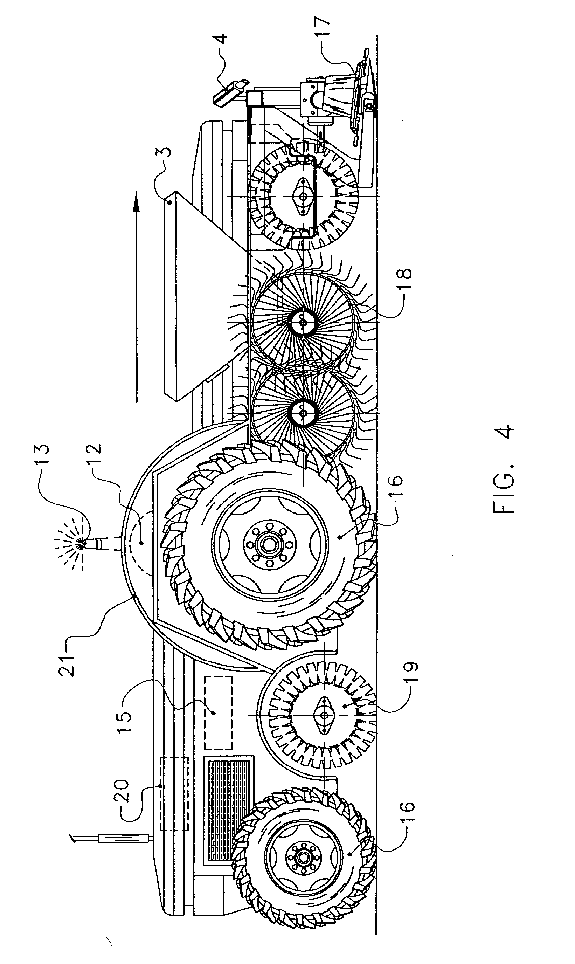

Figure 4 shows schematically in side view the manure application machine according to Figure 3.

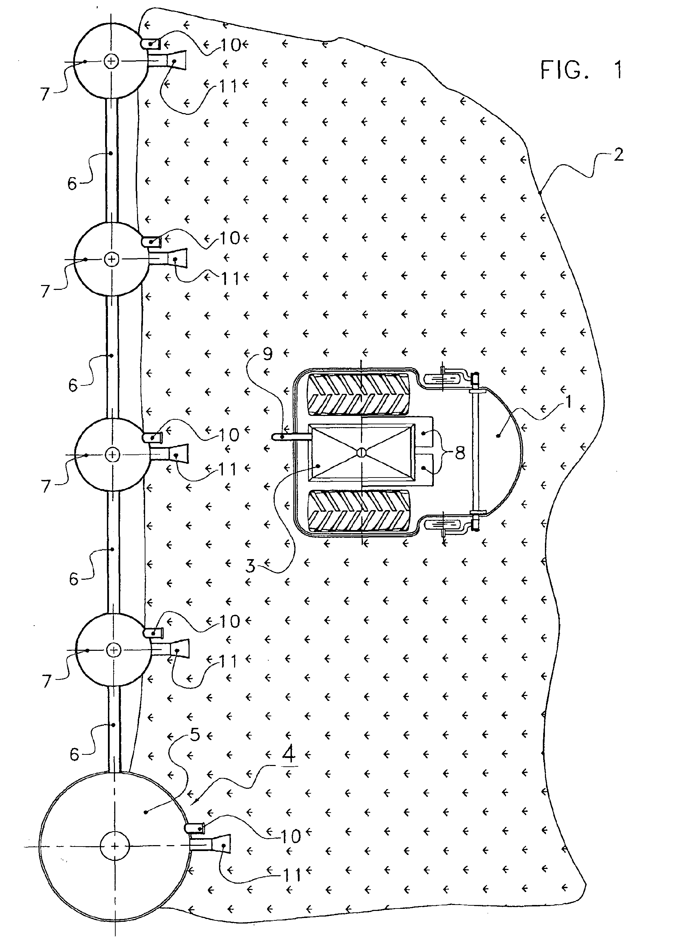

Figure 1 shows schematically in plan view an autonomous manure application machine 1 in an agricultural parcel 2 in an embodiment of an assembly according to the invention. It is pointed out here that an autonomous machine, i.e. a machine that does not require a driver for being moved, is known per se and will not be set out here in further detail for the sake of simplicity of the description. The autonomous manure application machine 1 is suitable for performing a manure application on the agricultural parcel 2. The agricultural parcel 2 is manured for example by means of a manuring-unit known per se, for example a fertilizer spreader or a liquid-manure-spraying device comprising dragging hoses.

The manure application machine 1 comprises a machine container 3 for containing a working stock of manure or fertilizer. The autonomous manure application machine 1 further comprises a (non-shown) route-information system known per se and provided with a memory for containing position data with respect to the agricultural parcel 2. In particular the position of a storage container 4, containing a relatively large amount of manure product, is stored in the memory. According to the invention, the storage container 4 comprises a main storage tank 5 and, connected thereto via lines 6, sub-storage tanks 7. For transporting the manure product from the main storage tank to the sub-storage tanks there may be used for example screw transporters or pumps in the lines 6. The data may be stored for example in the form of a ground plan. The route-information system further comprises a (non-shown) position-determining device known per se for determining the position of the autonomous manure application machine 1 in the agricultural parcel 2 by means of for example a GPS-system. Thus it is possible for the control-unit of the autonomous manure application machine 1 to move the manure application machine 1 to the storage container 4, in particular to the storage tank (or sub-storage tank) that is located closest to the manure application machine, with the aid of data from the route-information system, taking the working stock that is still present, as measured for example by a weighing device 8 or another measuring device, into account.

In the embodiment shown the manure application machine 1 comprises a mechanical protrusion 9 that pushes against a pressure mechanism 10 of the storage tank 5, 7 when the manure application machine 1 has been moved by the control-unit to the relevant storage tank. Subsequently, by a mechanical operation that is comparable with that of a flushing cistern of a lavatory, at least a part of the product can be conveyed to the machine container 3 via a chute 11.

When the stock in the main storage tank 5 has come below a particular level, measured for example by a measuring device such as a weighing device, a corresponding signal can be sent, for example by telephone, by the measuring device to the owner of the parcel or other parties concerned.

In particular if the manure product is liquid, apart from the use of sub-storage tanks that are in liquid-communication with the main storage tank, there can be used connecting points for storage to which for example an end of the dragging hose can be connected or coupled by the manure application machine, by which is also meant that the dragging hose is continuously connected to the connecting point by means of a valve that can be opened and closed by the manure application machine. The other end of the dragging hose can be coupled to the manure application machine, for example by a gripper, so that the dragging hose can be moved over the parcel portion to be manured.

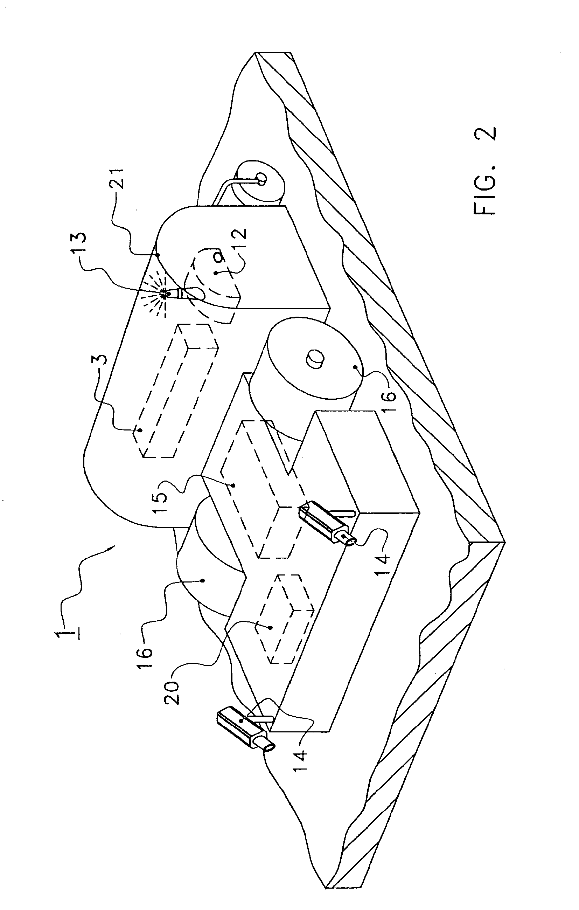

Figure 2 shows schematically a perspective view of an embodiment of an autonomous manure application machine 1 for performing a manure application according to the invention. The manure application machine further comprises a crop-processing-unit as will be described hereinafter. It will be obvious that, although the invention is described with reference to a crop-processing operation, also other agricultural operations can be applied within the scope of the invention. The machine 1 can be moved autonomously by determining, by means of a position-determining system 12, possibly provided with an aerial 13, the position of the machine 1 in the field to be processed. Such position-determining systems are known per se, for example GPS, DGPS, Galileo, or position determination by means of beacons and the like. The machine 1 further comprises a boundary-detecting system 14, for example one or more cameras or another boundary-detecting system known per se, for detecting a boundary of already mown crop, for example already mown crop that has been tedded or deposited in a swath. In the case that the crop processing does not automatically produce a boundary, the machine can be controlled in such a way that a to be detected boundary is produced. With the aid of data from the position-determining system 12, 13 and/or the boundary-detecting system 14, a control-unit 15 for controlling the machine 1, in particular the driving motor and the wheels 16 thereof, is controlled, so that the machine 1 follows a track in the field to be processed.

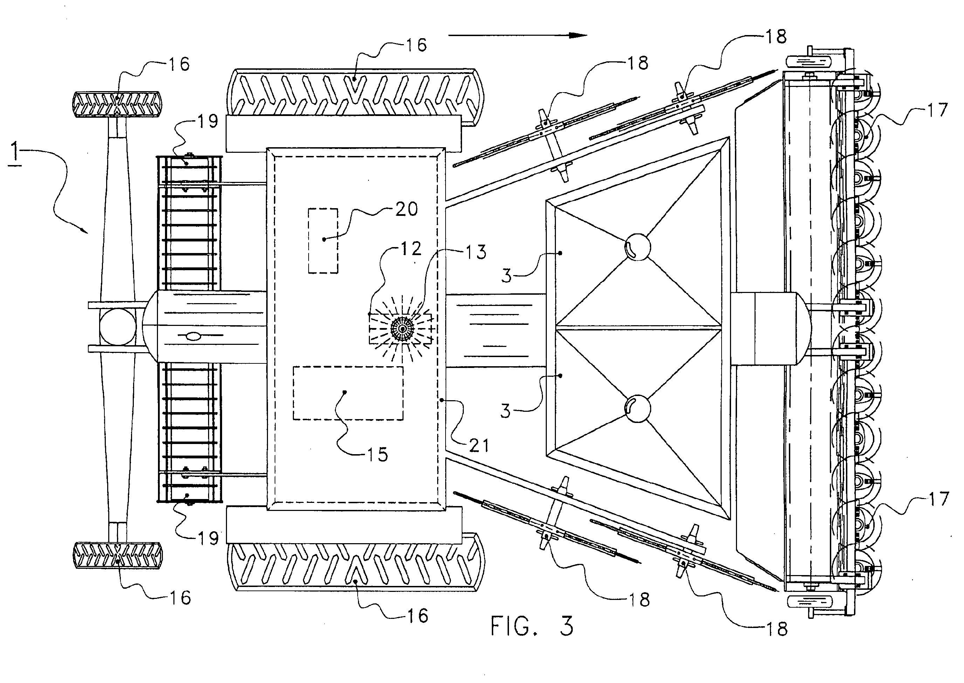

The machine 1 is provided with a mowing-unit 17 (Figure 3) for mowing the crop. Such a mowing-unit 17 may be constituted by the currently often used disc-mowers or (double)-knife mowers. Although a drum-mower may be applied as well, the latter is not preferred because of its heavier weight relative to other mowing-units. However, a cage-mower known per se is extremely suitable. Said cage-mower does not only enable the transport of the mown crop in a simple manner to a receptacle or a drag bag, but is preferable to the other known mowing-units because of its safety.

The machine 1 further comprises a rake-unit 18 for raking mown crop. Such a rake-unit is also known per se and may be constituted for example by swath boards and/or rotating rakes.

There is disposed a tedder-unit 19 for tedding mown crop. Although also here it is possible to use tedder-units known per se, it is advantageous to use a drum-tedder with a comb. The drum-tedder picks up the crop and guides it through the comb, so that a frictional crushing effect is created. By putting the comb out of operation, by pivoting it away for example, there is created a normal drum-tedder that can be used for tedding the crop. Of course, besides a comb, other crushing devices for crushing the crop may be used as well.

The tedder-unit 19 may be provided, if desired, with a (non-shown) pick-up device for picking up the crop.

Depending on the wishes of the user, it is possible for the machine 1 to perform every processing operation separately or several processing operations simultaneously. For this purpose the machine 1 is provided with a switching device 20, for example a computer, for switching on and switching off at least one of the units from the group consisting of the mowing-unit, the rake-unit and the tedder-unit. Here it is advantageous if the switching device is additionally or alternatively suitable for switching on and switching off at least one of the devices from the group consisting of crushing equipment and pick-up equipment. For this purpose the switching device 20 is connected in a proper manner to the relevant units or devices, and is preferably capable of being programmed beforehand and/or remotely.

In order to ensure a safe stay for human beings and animals present in the vicinity of the autonomous manure application machine 1, said machine 1 is provided with a number of protecting means. The machine 1 is provided with a cap 21 covering the crop-processing components, so that in particular the rotating parts are protected. There are further provided detectors, for example constituted by the cameras 14, for detecting living beings present in the vicinity of the machine 1. Said sensors are known per se, and as examples thereof are mentioned picture recognition systems, colour meters, infrared meters, ultrasonic detectors, lasers, mechanical feelers, and conductivity meters. For the sake of security, in particular the rear side is monitored by a plurality of sensors and protected by a plurality of mechanical protecting means, such as protective caps, flaps and the like.

Consequently, the machine 1 according to the invention can be designed so as to have small dimensions, in particular a length of 400 cm, a width of 200 cm and a maximum weight of 3000 kg are possible, which makes the machine easily transportable. Further a motor with a small capacity of for example 40 kW can be used, so that only a small quantity of fuel needs to be on board for a working duration of for example 12 or 24 hours.

The machine container 3 contains the working stock of fertilizer or manure. The manure application is in particular performed in such a way that the manure material does not get into the final product (for example grass). This can take place by activating the manuring-unit after one of the last processing operations to be performed, such as raking. As manuring-units can be used manuring-units known per se, such as fertilizer spreaders or sowing machines. Due to the fact that the manure application machine is autonomous, it can be designed so as to have small dimensions, so that the manure application can be performed very accurately, and spoiling of the manure material is thus prevented.

## Claims

1. A manure application machine (1) for performing a manure application, which manure application machine (1) is autonomously movable over a parcel (2) and is provided with a manuring-unit for manuring parcel portions, the manuring-unit being provided with a machine container (3) for containing an amount of manure product, **characterized in that** the manure application machine (1) is provided with a unit for performing an agricultural operation, in particular crop processing, the agricultural-operation-unit being provided with a mowing-unit (17) for mowing the crop, with a rake-unit (18) for raking mown crop, and with a tedder-unit (19) for tedding mown crop.

2. A manure application machine (1) as claimed in claim 1, **characterized in that** the tedder-unit (19) is provided with a crushing device for crushing the crop.

3. A manure application machine (1) as as claimed in claim 1 or 2, **characterized in that** the tedder-unit (19) is provided with a pick-up-device for picking up the crop.

4. A manure application machine (1) as claimed in any one of the preceding claims, **characterized in that** the manure application machine (1) is provided with a switching device (20) or switching on and switching off at least one of the units from the croup consisting of the mowing-unit (17), the rake-unit (18), the manuring-unit and the tedder-unit (19).

5. A manure application machine (1) as claimed in claim 4 with reference to claim 2 or 3, **characterized in that** the switching device (20) is suitable for switching on and switching off at least one of the devices from the group consisting of crushing equipment and pick-up equipment.

6. A manure application machine (1) as claimed in any one of the preceding claims, **characterized in that** the manure application machine (1) is provided with a position-determining system (12,13) for determining the position of the manure application machine (1), with a boundary-detecting system (14) for detecting a boundary of mown crop, and **in that** a control-unit (15) controls the manure application machine (1) with the aid of data from the position-determining system (12,13) and/or the boundary-detecting system (14).

7. A manure application machine (1) as claimed in any one of the preceding claims, **characterized in that** the manure application machine (1) is provided with a control-unit (15) comprising a route-information system for automatically moving the manure application machine (1).

8. A manure application machine (1) as claimed in any one of the preceding claims, **characterized in that** the manure application machine (1) is provided with a position-determining system (12,13) for determining the momentary position of the manure application machine (1).

9. A manure application machine (1) as claimed in any one of the preceding claims, **characterized in that** the manure application machine (1) is provided with a measuring device (8) for measuring the amount of product in the machine container (3).

10. A manure application machine (1) as claimed in any one of the preceding claims, **characterized in that** the machine container (3) is a machine container that can detachably be disposed on the manure application machine (1).

## Patentansprüche

1. Düngerausbringmaschine (1) zur Durchführung einer Düngerausbringung, wobei die Düngerausbringmaschine (1) autonom über eine Parzelle (2) bewegbar und mit einer Düngeeinheit zum Düngen von Parzellenteilstücken versehen ist, wobei die Düngeeinheit mit einem Maschinenbehälter (3) zur Aufnahme einer Düngemittelmenge versehen ist,
**dadurch gekennzeichnet, daß** die Düngerausbringmaschine (1) mit einer Einheit zum Durchführen einer landwirtschaftlichen Arbeit, insbesondere Mähgutaufbereitung, versehen ist, wobei die Einheit für landwirtschaftliche Arbeit mit einer Mäheinheit (17) zum Mähen des Gutes, mit einer Recheneinheit (18) zum Rechen von gemähtem Gut und mit einer Zetteinheit (19) zum Zetten von gemähtem Gut versehen ist.

2. Düngerausbringmaschine (1) nach Anspruch 1,
**dadurch gekennzeichnet, daß** die Zetteinheit (19) mit einer Quetschvorrichtung zum Quetschen des Gutes versehen ist.

3. Düngerausbringmaschine (1) nach Anspruch 1 oder 2,
**dadurch gekennzeichnet, daß** die Zetteinheit (19) mit einer Aufnahmevorrichtung zum Aufnehmen des Gutes versehen ist.

4. Düngerausbringmaschine (1) nach einem der vorhergehenden Ansprüche,
**dadurch gekennzeichnet, daß** die Düngerausbringmaschine (1) mit einer Schaltvorrichtung (20) versehen ist, um mindestens eine der Einheiten der aus der Mäheinheit (17), der Recheneinheit (18), der Düngeeinheit und der Zetteinheit (19) bestehenden Gruppe ein- und auszuschalten.

5. Düngerausbringmaschine (1) nach Anspruch 4 unter Rückbezug auf Anspruch 2 oder 3,
**dadurch gekennzeichnet, daß** die Schaltvorrichtung (20) geeignet ist, mindestens eine der Vorrichtungen der aus der Quetschvorrichtung und der Aufnahmevorrichtung bestehenden Gruppe ein- und auszuschalten.

6. Düngerausbringmaschine (1) nach einem der vorhergehenden Ansprüche,
**dadurch gekennzeichnet, daß** die Düngerausbringmaschine (1) mit einem Positionsermittlungssystem (12, 13) zum Ermitteln der Position der Düngerausbringmaschine (1) und mit einer Begrenzungsermittlungsvorrichtung (14) zum Ermitteln einer Begrenzung von gemähtem Gut versehen ist, und daß eine Steuereinheit (15) die Düngerausbringmaschine (1) mit Hilfe von Daten von dem Positionsermittlungssystem (12, 13) und/oder dem Begrenzungsermittlungssystem (14) steuert.

7. Düngerausbringmaschine (1) nach einem der vorhergehenden Ansprüche,
**dadurch gekennzeichnet, daß** die Düngerausbringmaschine (1) mit einer Steuereinheit (15) versehen ist, die ein Routeninformationssystem zum automatischen Bewegen der Düngerausbringmaschine (1) umfaßt.

8. Düngerausbringmaschine (1) nach einem der vorhergehenden Ansprüche,
**dadurch gekennzeichnet, daß** die Düngerausbringmaschine (1) mit einem Positionsermittlungssystem (12, 13) zum Ermitteln der momentanen Position der Düngerausbringmaschine (1) versehen ist.

9. Düngerausbringmaschine (1) nach einem der vorhergehenden Ansprüche,
**dadurch gekennzeichnet, daß** die Düngerausbringmaschine (1) mit einer Meßvorrichtung (8) zum Messen der Menge des Mittels in dem Maschinenbehälter (3) versehen ist.

10. Düngerausbringmaschine (1) nach einem der vorhergehenden Ansprüche,
**dadurch gekennzeichnet, daß** es sich bei dem Maschinenbehälter (3) um einen Maschinenbehälter handelt, der auf der Düngerausbringmaschine (1) lösbar angebracht werden kann.

## Revendications

1. Machine de distribution de fumier (1) destinée à effectuer une application de fumier, laquelle machine de distribution de fumier (1) peut se déplacer de manière autonome sur un terrain (2) et elle est munie d'une unité de fumage pour épandre du fumier sur des parties de terrain, l'unité de fumage étant munie d'un réservoir de machine (3) destiné à contenir une quantité de produit de fumier, **caractérisée en ce que** la machine de distribution de fumier (1) est munie d'une unité destinée à exécuter une opération agricole, en particulier de traitement des cultures, l'unité d'opération agricole étant munie d'une unité de fauchage (17) destinée à faucher les cultures, d'une unité de râtelage (18) destinée à râteler les cultures fauchées, et d'une unité de fanage (19) destinée à faner les cultures râtelées.

2. Machine de distribution de fumier (1) selon la revendication 1, **caractérisée en ce que** l'unité de fanage (19) est munie d'un dispositif de broyage destiné à broyer les cultures.

3. Machine de distribution de fumier (1) selon la revendication 1 ou 2, **caractérisée en ce que** l'unité de fanage (19) est munie d'un dispositif de ramassage destiné à ramasser les cultures.

4. Machine de distribution de fumier (1) selon l'une quelconque des revendications précédentes, **caractérisée en ce que** la machine de distribution de fumier (1) est munie d'un dispositif de commutation (20) destiné à mettre en marche et en arrêt au moins une des unités du groupe consistant en l'unité de fauchage (17), l'unité de râtelage (18), l'unité de fumage et l'unité de fanage (19).

5. Machine de distribution de fumier (1) selon la revendication 4 en référence à la revendication 2 ou 3, **caractérisée en ce que** le dispositif de commutation (20) est adapté à mettre en marche et en arrêt au moins un des dispositifs du groupe consistant en de l'équipement de broyage et de l'équipement de ramassage.

6. Machine de distribution de fumier (1) selon l'une quelconque des revendications précédentes, **caractérisée en ce que** la machine de distribution de fumier (1) est munie d'un système de détermination de position (12, 13) destiné à déterminer la position de la machine de distribution de fumier (1), d'un système de détection des contours (14) destiné à détecter un contour de cultures fauchées, et **en ce qu'**une unité de commande (15) commande la machine de distribution de fumier (1) à l'aide de données provenant du système de détermination de position (12, 13) et/ou du système de détection des contours (14).

7. Machine de distribution de fumier (1) selon l'une quelconque des revendications précédentes, **caractérisée en ce que** la machine de distribution de fumier (1) est munie d'une unité de commande (15) comprenant un système d'information de route destiné à déplacer automatiquement la machine de distribution de fumier (1).

8. Machine de distribution de fumier (1) selon l'une quelconque des revendications précédentes, **caractérisée en ce que** la machine de distribution de fumier (1) est munie d'un système de détermination de position (12, 13) destiné à déterminer la position courante de la machine de distribution de fumier (1).

9. Machine de distribution de fumier (1) selon l'une quelconque des revendications précédentes, **caractérisée en ce que** la machine de distribution de fumier (1) est munie d'un dispositif de mesure (8) destiné à mesurer la quantité de produit dans le réservoir de machine (3).

10. Machine de distribution de fumier (1) selon l'une quelconque des revendications précédentes, **caractérisée en ce que** le réservoir de machine (3) est un réservoir de machine qui peut être disposé de manière amovible sur la machine de distribution de fumier (1).
